# EUROPEAN PATENT APPLICATION

(11) **EP 1 555 852 A2**
(43) Date of publication of application: **20.07.2005**
(21) Application number: 05000723.6
(22) Date of filing: 14.01.2005
(51) Int. Cl.: H04S 1/00

(54) **Apparatus and method for playing and storing three-dimensional stereo sound in communication terminal**

(30) Priority: 15.01.2004 KR 2004003006
(71) Applicant: Samsung Electronics Co., Ltd., Suwon-si, Gyeonggi-do (KR)
(72) Inventor: Kang, Sang-Ki, Yeongtong-gu, Suwon-si, Gyeonggi-do (KR); Kim, Jae-Hyun, Yeongtong-gu, Suwon-si, Gyeonggi-do (KR)
(74) Representative: Lang, Johannes, Dipl.-Ing.

(57) **Abstract**

Disclosed is a mobile communication terminal supporting a three-dimensional stereo sound effect. The mobile communication terminal has a memory for storing sound data having a three-dimensional stereo sound effect and sound data having no three-dimensional stereo sound effect; a three-dimensional sound generation unit for reading the sound data from the memory when an incoming call is generated or when playback is requested by a user, and for reconstructing the read sound data to have a three-dimensional stereo sound effect; and a speaker for outputting the reconstructed sound data in a type of audible sound.

## Description

### BACKGROUND OF THE INVENTION

### Field of the Invention

The present invention relates to a mobile communication terminal. More particularly, the present invention relates to an apparatus and a method for enabling sound data having a three-dimensional stereo sound effect to be stored and played in a mobile communication terminal.

### Description of the Related Art

A portable telephone, such as a cellular phone and a Personal Communication Services (PCS) telephone, which are typical communication terminals, emits a beeping sound or an alert sound to the exterior through a speaker so that the user can recognize the reception of an incoming call while using the portable telephone. With the development of communication and sound processing techniques to meet user demands, various research is being actively conducted to provide richer sound and better music quality in a small communication terminal. Moreover, the use of the Internet has spread so rapidly that it is possible to download various original beep sounds and moving pictures to a communication terminal via the Internet, so that user demand has rapidly increased for playing personalized and unique bell sounds in a communication terminal.

Now, most communication terminals that are capable of playing 4-poly sound or more, use Yamaha sound chips to play bell sound data. The Yamaha sound chips can support 4-poly, 16-poly, 40-poly, and 64-poly sounds. The term "poly" is used to distinguish the sound chips according to the number of chords which can be played. In general, as the number of 'poly' sounds in a terminal increases, the number of sounds of various musical instruments that the terminal can simultaneously express also increases. The number of different instrument sounds that can be expressed is equal to the number of 'poly' sounds, which enables sound played on the communication terminal to sound similar to the original sound.

Recently, various attempts have been made to provide a three-dimensional stereo sound effect, beyond the play of a simple bell sound, by equipping a communication terminal with two or more speakers. The term "stereo sound" means a sound signal to which spatial information is added so that a listener can perceive a sense of direction and distance of a sound upon hearing it. Recently, the three-dimensional stereo sound effect has also been applied to the mobile communication field resulting in increased demand for sound recording and playback techniques to provide more enhanced spatial and movement information, so that it is necessary to authentically play the three-dimensional stereo sound.

A typical stereo sound playback is mainly provided by a multi-channel (such as 5.1 channel) signal in movie, TV, audio, and home theater fields. Recently, various attempts have been made to develop a portable phone or a personal digital assistant (PDA) telephone capable of providing such a three-dimensional stereo sound effect. For example, a proposed method is to prestore sound data including information about the three-dimensional stereo sound effect in a memory and to play the stored sound data, which provides the three-dimensional stereo sound effect to the user using a terminal equipped with two or more speakers.

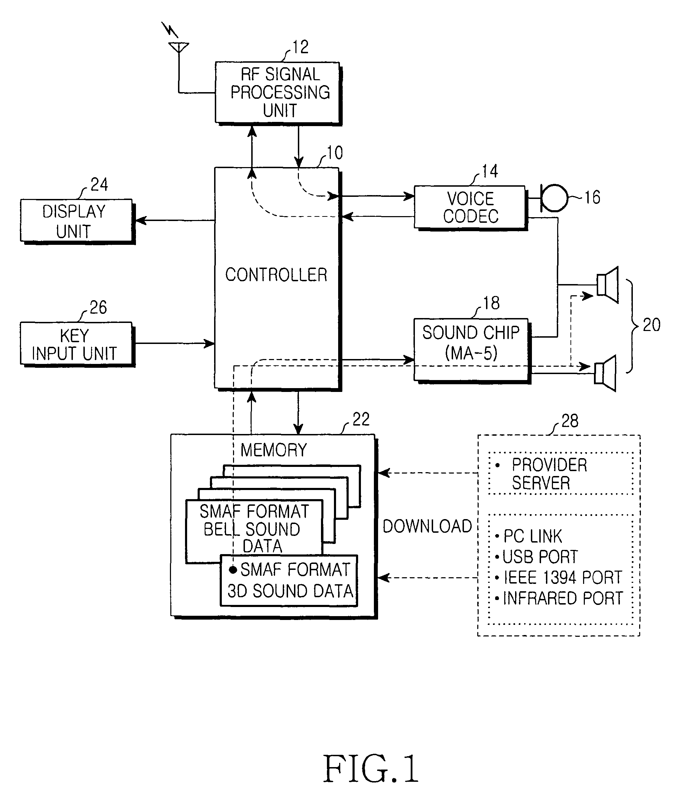

FIG. 1 is a block diagram illustrating a sound signal playback apparatus of a conventional mobile communication terminal.

A controller 10 performs the entire control operation for the mobile communication terminal. A Radio Frequency (RF) signal processing unit 12 down-converts the frequency of a signal, which is received through an antenna by a radio channel, of a predetermined frequency band from a network, and transmits the received signal to either the controller 10 or a voice coder/decoder (codec) unit 14 according to the type of signal, under the control of the controller 10.

A signal transmitted from the RF signal processing unit 12 to the controller 10 includes a data signal received through a traffic channel, a paging signal received through a control channel, a control signal, and the like. Data transmitted from the RF signal processing unit 12 to the voice codec unit 14 include voice data received when a voice call has been established. Also, the RF signal processing unit 12 up-converts a signal received from the controller 10 and coded voice data received from the voice codec unit 14 to radio signals of a predetermined frequency band and emits the radio signals through the antenna.

The voice codec unit 14 generally includes a vocoder and operates according to the control of the controller 10. The voice codec unit 14 codes an electrical voice signal received from a microphone 16 and transmits the coded voice signal to the RF signal processing unit 12. Also, the voice codec unit 14 decodes coded voice data, which is received from the RF signal processing unit 12, to convert the coded voice data into an electrical voice signal, and then outputs the electrical voice signal to a speaker 20. The speaker 20 converts the received electrical voice signal into an audible sound and outputs the audible sound.

A display unit 24 includes a display device, such as a liquid crystal display (LCD), for displaying the proceeding states with letters and/or icons, and an alert lamp. In addition, a vibration motor may also be used to indicate certain states. The liquid crystal display of the display unit 24 displays a current state of the mobile communication terminal. Also, the liquid crystal display converts data input, when the user selects a key, into letters, icons, or characters, and displays the letters, icons, or characters.

A key input unit 26 generally has a key matrix structure and includes number keys for dialing, function keys for performing various functions, a selection key and direction keys for movement in the up, down, light, left directions. The key input unit 26 generates key data corresponding to a key operated by the user and outputs the generated key data to the controller 10.

A memory unit 22 may include a Read Only Memory (ROM) and a Random Access Memory (RAM), and is partitioned into a region for storing program codes required for the control operation of the controller 10, a region for storing data input by the user, and a region for temporarily storing data generated during a control operation. In addition, the memory unit 22 includes a region for storing sound data, which can be used to notify the user of the reception of an incoming call or to generate an alert sound. The sound data may be prestored by a manufacturer or may be downloaded from a provider server (carrier server) 28 which is connected to the mobile communication terminal through wireless, a Universal Serial Bus (USB ) port, an IEEE 1394 port, an infrared port, or the like. In general, the sound data are stored in a synthetic music mobile application format (SMAF), which has an extension of '.mmf' when being stored as a file, so as to be processed by a sound chip 18, such as a YAMAHA chip (MA-5).

The sound source chip 18 converts the sound data, which is read from the memory unit 22 by the controller 10, into an electrical signal, and outputs the converted electrical signal through the speaker 20.

As described above, the conventional mobile communication terminal uses the sound chip 18 in order to play sound data such as a bell sound. Therefore, the memory unit 22 must store three-dimensional sound data in the SMAF. Also, the provider server 28 converts three-dimensional sound data obtained through a three-dimensional playing algorithm into the SMAF and downloads the converted data to the memory unit 22.

However, the Yamaha sound chip only approximately estimates the original sound data by means of a synthetic sound table and tones, which are possessed by the Yamaha sound chip. Accordingly, when sound data having the three-dimensional stereo sound effect is converted into the SMAF, the data loses a considerable amount of the three-dimensional stereo sound effect and becomes a large amount of data, thereby making it difficult to actually apply the sound data in SMAF to a mobile communication terminal.

Now, while a mono bell sound, which is obtained by a scheme for outputting sound information using one speaker, and a stereo bell sound, which is obtained by a scheme for outputting planar sound information using two speakers, are applied using sound data of 30 kbytes or less, sound data having a three-dimensional stereo sound effect requires sound data files ten times larger in size than that of the conventional bell sound. When three-dimensional sound data having such an enormous amount of data as described above is approximated to the SMAF using a synthetic sound table provided from the Yamaha sound chip, the size of the sound data are somewhat reduced, but the three-dimensional stereo sound effect of original sound data is significantly deteriorated.

That is, the Yamaha sound chip cannot completely support the three-dimensional stereo sound effect and cannot correctly play the original sound data due to an approximation error, so that the Yamaha sound chip is limited in its performance. Moreover, since the Yamaha sound chip causes distortion of a specific sound when simultaneously playing voice and music, it is necessary to separately store first sound data including only voices and second sound data including only melodies when a bell sound is made up, thereby requiring a large storage capacity.

### SUMMARY OF THE INVENTION

Accordingly, the present invention has been made to solve the above-mentioned problems occurring in the prior art, and an object of the present invention is to provide an apparatus and a method for supporting a three-dimensional stereo sound effect in a mobile communication terminal.

Another object of the present invention is to provide an apparatus and a method for storing three-dimensional sound effect sound data in a minimum size in a mobile communication terminal.

Still another object of the present invention is to provide an apparatus and a method for storing and playing three-dimensional sound effect sound data in an MP3 format or an AAC format in a mobile communication terminal.

Still another object of the present invention is to provide an apparatus and a method, which apply non-three-dimensional sound data to a three-dimensional stereo sound effect and then store and play the three-dimensional stereo sound data in a mobile communication terminal.

To accomplish these objects, in accordance with one aspect of the present invention, there is provided an apparatus for supporting three-dimensional stereo sound in a mobile communication terminal, the apparatus comprises a memory for storing non-three-dimensional sound data; a decoding unit for decoding the sound data read from the memory by an MP3 decoding scheme or an AAC decoding scheme and for transmitting the decoded sound data to a three-dimensional sound generation unit, when the sound data is in an MP3 format or an AAC format; the three-dimensional sound generation unit for reading the sound data from the memory when an incoming call is generated or when playback is requested by a user, and for reconstructing the read sound data to have a three-dimensional stereo sound effect; a sound output unit for outputting the reconstructed sound data in a type of audible sound; and an encoding unit for encoding the reconstructed sound data without distortion of the three-dimensional stereo sound effect, and transmitting the encoded sound data to the memory.

In accordance with another aspect of the present invention, there is provided a method for playing and storing sound data having a three-dimensional stereo sound effect in a communication terminal, the method comprising the steps of acquiring non-three-dimensional sound data; decoding sound data read from a memory by an MP3 decoding scheme or an AAC decoding scheme before reconstructing the read sound data, when the read sound data are in an MP3 or AAC format; reconstructing the acquired sound data to three-dimensional sound data having the three-dimensional stereo sound effect; outputting the reconstructed sound data in a type of audible sound; and encoding the reconstructed sound data without distortion of the three-dimensional stereo sound effect in order to store the reconstructed sound data in the memory.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a sound signal playing apparatus of a conventional mobile communication terminal;
FIG. 2 is a block diagram illustrating a sound signal playing apparatus of a mobile communication terminal according to an embodiment of the present invention;
FIG. 3 is a flowchart illustrating a sound playback procedure in a mobile communication terminal according to an embodiment of the present invention; and
FIG. 4 is a flowchart illustrating a sound storage and playback procedure in a mobile communication terminal according to an embodiment of the present invention.

### DETAILED DESCRIPTION OF THE PREFERRED EMBODIMENTS

Hereinafter, preferred embodiments of the present invention will be described with reference to the accompanying drawings. In the following description of the embodiments of the present invention, a detailed description of known functions and configurations incorporated herein will be omitted for sake of conciseness.

The embodiments of the present invention generate and play sound data having a three-dimensional stereo sound effect using a Motion Picture Experts Group-1 Audio layer 3: MPEG-1 layer 3 (MP3) scheme or an MPEG-2 Advanced Audio Coding (MPEG-2 AAC: hereinafter referred to as 'ACC') scheme in a mobile communication terminal. The three-dimensional stereo sound effect refers to an effect where the sound output from a source is heard by the user as if the sound is emitted from a three-dimensional space centering around the user.

Conventionally, the three-dimensional stereo sound effect is physically realized by two or more speakers spaced apart from each other. However, apparatuses, such as a mobile communication terminal, and the like, having a limited size can realize the three-dimensional stereo sound effect, by reconstructing sound data so that the user may hear sound data as if the sound data is output through virtual speakers located at multiple positions in the three-dimensional space. Herein, such reconstructed sound data will be called three-dimensional sound data.

According to an embodiment of the present invention, when a communication terminal, such as a portable telephone or a PDA telephone in which an MP3 decoder or an AAC decoder is contained, plays a three-dimensional stereo sound, the communication terminal generates sound data in an MP3 format or an AAC format, stores the generated sound data in a communication terminal and plays the stored sound data using the MP3 decoder or the AAC decoder, for the purpose of improving the performance and the memory efficiency of the communication terminal. In addition, in a case of sound data having no three-dimensional stereo sound effect, the communication terminal according to an embodiment of the present invention reconstructs the sound data so as to have the three-dimensional stereo sound effect and plays the reconstructed sound data.

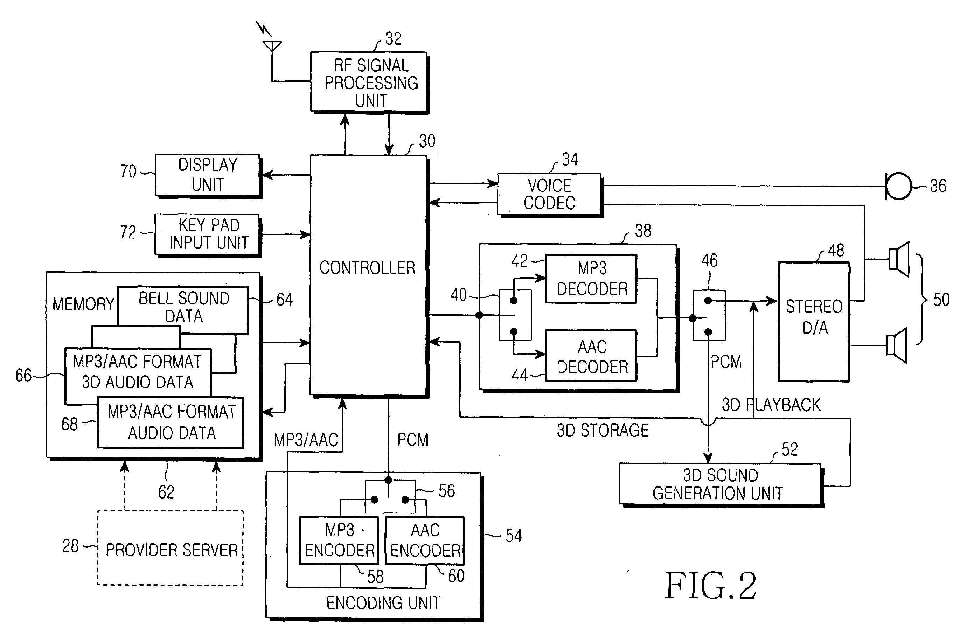

FIG. 2 is a block diagram illustrating a mobile communication terminal capable of storing and playing three-dimensional sound data according to an embodiment of the present invention.

A controller 30 comprises a modem chip for performing an entire control operation for the mobile communication terminal. An RF signal processing unit 32 down-converts the frequency band of a signal, which is received through an antenna by a radio channel of a predetermined frequency band from a network, and transmits the received signal to the controller 30 or a voice codec unit 34 according to the type of received signal, under the control of the controller 30.

Signals transmitted from the RF signal processing unit 32 to the controller 30 comprise a data signal received through a traffic channel, a paging signal received through a control channel, a control signal, and the like. A signal transmitted from the RF signal processing unit 32 to the voice codec unit 34 comprises voice data received when a voice call has been established. Also, the RF signal processing unit 32 up-converts data received from the controller 30 and coded voice data received from the voice codec unit 34 to radio signals of a predetermined frequency band and emits the radio signals through the antenna.

The voice codec unit 34 generally comprises a vocoder and operates according to the control of the controller 30. The voice codec unit 34 codes an electrical voice signal received from a microphone 36 and transmits the coded voice signal to the RF signal processing unit 32 through the controller 30 . Also, the voice codec unit 34 decodes coded voice data, which are received from the RF signal processing unit 32 through the controller 30, to convert the coded voice data into an electrical voice signal, and then outputs the electrical voice signal to a speaker 50. The speaker 50 amplifies and converts the received electrical voice signal into an audible sound and outputs the audible sound.

A display unit 70 includes a display, such as a liquid crystal display, for displaying the proceeding states of the mobile communication terminal with letters and/or icons, and an alert lamp. A vibration motor may also be used to indicate various states of the mobile communication terminal. The liquid crystal display (LCD) of the display unit 70 displays a current state of the mobile communication terminal. Also, the LCD converts input data, which is input when the user selects a key, into letters, icons, or characters, and displays the letters, icons or characters.

A key input unit 72 generally has a key matrix structure comprising number keys for dialing, function keys for performing various functions, a selection key, direction keys for movement in the up, down, light, left directions. The key input unit 72 generates key data corresponding to a key operated by the user and outputs the generated key data to the controller 30.

A memory unit 62 comprises a Read Only Memory (ROM) and a Random Access Memory (RAM), and can be partitioned into a region for storing program codes required for the control operation of the controller 30, a region for storing data input by the user, and a region for temporarily storing data generated during a controlling operation. In addition, the memory unit 62 preferably comprises a region for storing sound data 64, 66 and 68 for melodies, which can be used to notify the user of an incoming call or to generate an alert or an alarm sound.

The sound data 64, 66 and 68 may be prestored by a manufacturer or may be downloaded from a provider server (carrier server) 28, which is connected with the mobile communication terminal through a wireless connection, a Universal Serial Bus (USB) port, an IEEE 1394 port, an infrared port, or the like. Also, the user connects the mobile communication terminal to a personal computer through a wireless connection, a USB port, an IEEE 1394 port, or an infrared port, and then downloads and stores the sound data 64, 66 and 68 in the memory unit 62 using the connected personal computer. The sound data 64, 66 and 68 may be restored, after being reconstructed by a three-dimensional sound generation unit 52 to have the three-dimensional stereo sound effect according to an embodiment of the present invention described later.

A decoding unit 38 converts the sound data 64, 66 and 68, which is read from the memory unit 62 by the controller 30, into an electrical signal, and outputs the electrical signal to the speaker 50. The speaker 50 includes two or more speaker devices so as to support the three-dimensional stereo sound effect. The speaker 50 is preferably a stereo speaker which amplifies an analog stereo signal converted by a stereo digital-to-analog converter 48 and outputs the analog stereo signal as an audible sound. Herein, the stereo digital-to-analog converter 48 and the speaker 50 are called a sound output unit.

The decoding unit 38 comprises at least one of an MP3 decoder 42 and an AAC decoder 44. Although it is not shown, the mobile communication terminal shown in FIG. 2 may process sound data of AAC/MP3 formats by means of the sound chip. FIG. 2 shows a construction of the mobile communication terminal in which both the MP3 decoder 42 and the AAC decoder 44 are included and one of the two deciders is selected by a switch 40.

That is, the memory unit 62 stores simple bell sound data 64, three-dimensional sound data 66 of the MP3/AAC format, and non-three-dimensional sound data 68 of the MP3/AAC format. When the playback of sound data is requested either by the user or by the mobile communication terminal itself, such as the reception of an incoming call, the generation of an alert, or other similar operations, the controller 30 reads requested sound data from the memory unit 62 and provides the read data to the decoding unit 38.

The simple bell sound data 64 represent uncompressed data which include a Pulse Code Modulation (PCM) stream, a Musical Instrument Digital Interface (MIDI), an MFi, an SMAF, a Compact MIDI, or the like. The three-dimensional sound data 66 represents MP3/AAC-compressed data, which is reconstructed to have the three-dimensional stereo sound effect. The non-three-dimensional sound data 68 represents MP3/AAC-compressed data, which has no three-dimensional stereo sound effect.

In the case of sound data in MP3 format, the switch 40 is switched by the control of the controller 30 so as to send the MP3 sound data to the MP3 decoder 42. The MP3 decoder 42 decodes the MP3 sound data by an MP3 scheme. Also, in the case of sound data of the AAC format, the switch 40 is switched by the control of the controller 30 so as to send the AAC sound data to the AAC decoder 44. The AAC decoder 44 decodes the AAC sound data by an AAC scheme. The bell sound data 64 may be decoded by either the MP3 decoder 42 and the AAC decoder 44. The decoded signal of a PCM stream type is transmitted to the stereo digital-to-analog converter 48 by the switch 46, is converted into an analog signal and is output through the speaker 50. When the user wants to obtain the three-dimensional stereo sound effect with sound data read from the memory unit 62 although the sound data does not have a three-dimensional stereo sound effect, the decoded PCM stream is input to the three-dimensional sound generation unit 52 through the switch 46. In this case, the operation of the switch 46 is controlled by the controller 30.

Hereinafter, sound data compression schemes applied to embodiments of the present invention will be described.

In general, when an electric device plays various sounds generated in nature, the electric device uses a method of converting voice and sound signals into pulses and storing the pulses in a wave shape. However, in order to store the sound with the quality of sound similar to an original sound, a remarkably large data capacity reaching 10 Mbytes is required to store sound signals for one minute. A scheme for compressing and storing sound data, obtained through study and research in order to solve the problem of the above-mentioned large capacity, is MP3, which is a sound compression codec. MP3 is a standard for sound data, which has been developed on the basis of MPEG-1, which is a compression format for video data.

MP3 can compress digital audio data into a size approximately twelve times smaller than that of the digital audio data stored in a general audio Compact Disk (CD) while maintaining the quality of the digital audio sound. MP3 sound data having a size ten times smaller than that of a general digital audio data can ensure the quality of sound (16 bits and 44.1 kHz) to be as good as a CD.

Unlike MP3, the AAC derives not from MPEG-1, but from MPEG-2 and is also called 'MP4', which means a more developed technique than MP3. The MPEG-2 used for Digital Versatile Disc (DVD) video has a superior quality of sound to and a higher compression ratio than MPEG-1, thereby having excellent performance including screen quality that is a four times improvement over MPEG-1 with multiple language support. The AAC deriving from such MPEG-2 can compress general digital audio data by a twentieth (1/20) and is a digital file compression method capable of preventing the data from being illegally copied.

The data structure of the MP3 is fixed while the data structure of the AAC is variable. That is, MP3 stores data in a unit of frame including data and a header. Since the frame has a fixed size, the frame may include an unoccupied capacity which is unnecessary even in a portion having a high compression ratio. In contrast, since the frame of the AAC has a variable structure to change the size of the frame according to compression ratios, the capacity of the entire data is significantly reduced. Actually, the AAC can reduce its data capacity by maximum 30 % more as compared with that of the MP3.

The second advantage of the AAC is the good quality of sound. Unlike the MP3, the AAC improves the quality of sound by two techniques, that is, a temporal noise shaping ('TNS') and prediction. The TNS is a quantization compensation technique, which reduces noise and generates a sound similar to an original sound by perceptually decreasing error caused when a continuous analog music signal is changed into digital data of 'one' and 'zero'. The prediction includes memorizing a value compensated by the TNS. That is, the prediction is to memorize information about values compensated in previous portions and to use the memorized information when the same data is generated in following portions. If two of the same sounds are compensated to different values in a quantization step, the two same sounds are output as different sounds. Therefore, the prediction is performed so as to compensate same sounds to the same value.

As described above, the MP3 and the AAC do not change original sound data to their approximate values, but compress the original sound data by a perceptual coding method at a level in which the characteristics of an audio signal cannot be perceptually recognized, thereby preventing a three-dimensional stereo sound effect included in the original sound data from being distorted. Moreover, from the viewpoint of both a provider server providing three-dimensional sound data and the mobile communication terminal downloading those, there are advantages in that a download time period is shortened and the memory use is twice as efficient as compared to that of a conventional SMAF.

Meanwhile, when the user wants to obtain the three-dimensional stereo sound effect with sound data read from the memory unit 62 although the sound data does not have a three-dimensional stereo sound effect, the decoded PCM stream is input to the three-dimensional sound generation unit 52 by the switch 46.

The three-dimensional sound generation unit 52 applies sound data of a PCM stream type having no three-dimensional stereo sound effect to the three-dimensional stereo sound effect, by processing the sound data according to a three-dimensional sound generation algorithm. Herein, the expression 'applying the three-dimensional stereo sound effect' means reconstructing sound data having a planar mono or stereo sound effect so as to be output as if the sound data existed in a three-dimensional space. That is, the mobile communication terminal shown in FIG. 2 according to an embodiment of the present invention can apply the three-dimensional stereo sound effect to sound data having no three-dimensional stereo sound effect.

Since the three-dimensional sound generation unit 52 receives a PCM stream, the non-three-dimensional sound data 68 of the MP3/AAC format stored in the memory unit 62 is input to the three-dimensional sound generation unit 52 after being decoded by the decoding unit 38. When sound data read from the memory unit 62 is already constructed in the type of PCM stream, the sound data is input directly to the three-dimensional sound generation unit 52 without being decoded. The three-dimensional sound generation unit 52 reconstructs sound data of the PCM stream type, which is downloaded remotely from a provider server or directly from a personal computer, to have the three-dimensional stereo sound effect before storing the sound data in the memory unit 62.

Three-dimensional sound data generated or reconstructed according to the three-dimensional sound generation algorithm may be stored in the memory unit 62 for later use, or may be played in realtime. In the case of playback, the three-dimensional sound data of the PCM stream type output from the three-dimensional sound generation unit 52 are converted into an analog signal by the stereo digital-to-analog converter 48 and then output to the speaker 50.

In the case of storage, since the three-dimensional sound data of the PCM stream type requires a very large memory capacity, it is an inefficient use of memory to store the three-dimensional sound data in its original form in the memory unit 62. Therefore, the three-dimensional sound data of the PCM stream type is compressed to sound data of an MP3 or AAC format by an MP3 encoder 58 or an AAC encoder 60, respectively, of an encoding unit 54, and then is stored as three-dimensional sound data 66 in the MP3 or AAC format in the memory unit 62.

Meanwhile, the above description has shown the construction and the operation of the mobile communication terminal, which can perform both the reconstruction of three-dimensional sound data and MP3 and AAC encoding, of outputting or storing three-dimensional sound data reconstructed according to the selection of the user. Hereinafter, a communication terminal having only a three-dimensional sound generation function will be described as another embodiment of the present invention. According to this embodiment of the present invention, according to the request of the user, the communication terminal reconstructs sound data having no three-dimensional stereo sound effect so as to change the sound data into three-dimensional sound data. In this case, the reconstructed data may not be stored or may be stored without being encoded into AAC/MP3 format according to necessity.

According to still another embodiment of the present invention, a communication terminal converts uncompressed sound data, which is downloaded remotely from a provider server, is downloaded directly from a personal computer, or is read from the memory unit 62, into sound data of the MP3 or AAC format and then stores the converted sound data in the memory unit 62.

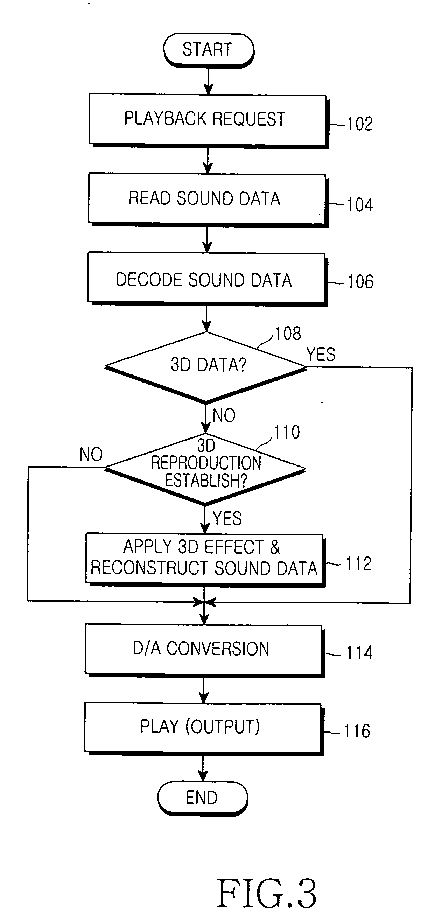

FIG. 3 is a flowchart illustrating a sound playback procedure in a mobile communication terminal according to an embodiment of the present invention. In this embodiment, a procedure of generating and outputting sound data having the three-dimensional stereo sound effect according to the user's establishment will be described.

When an incoming call is generated or the user requests playback in step 102, sound data appointed for an incoming call or sound data requested by the user is read from the memory unit 62 in step 104. When the read sound data is in MP3 or AAC format, the read sound data is decoded by a relevant decoder 42 or 44 of the decoding unit 38 in step 106.

In step 108, the controller 30 determines whether or not the read sound data is three-dimensional sound data having the three-dimensional stereo sound effect. The controller 30 proceeds to step 114 when the read sound data is three-dimensional sound data and proceeds to step 110 when the read sound data is not three-dimensional sound data. In step 110, the controller 30 determines whether or not a three-dimensional playback function is established and if the user requests three-dimensional playback. As a result, if the user requests three-dimensional playback, the controller 30 proceeds to step 112, but if not, the controller 30 proceeds step 114. In step 112, the sound data is applied to the three-dimensional stereo sound effect by the three-dimensional sound generation unit 52, thereby being reconstructed into three-dimensional sound data.

In step 114, the stereo digital-to-analog converter 48 converts the decoded sound data or the reconstructed three-dimensional sound data into an analog signal. In step 116, the converted analog signal is output through the speaker 50 including at least two speaker devices.

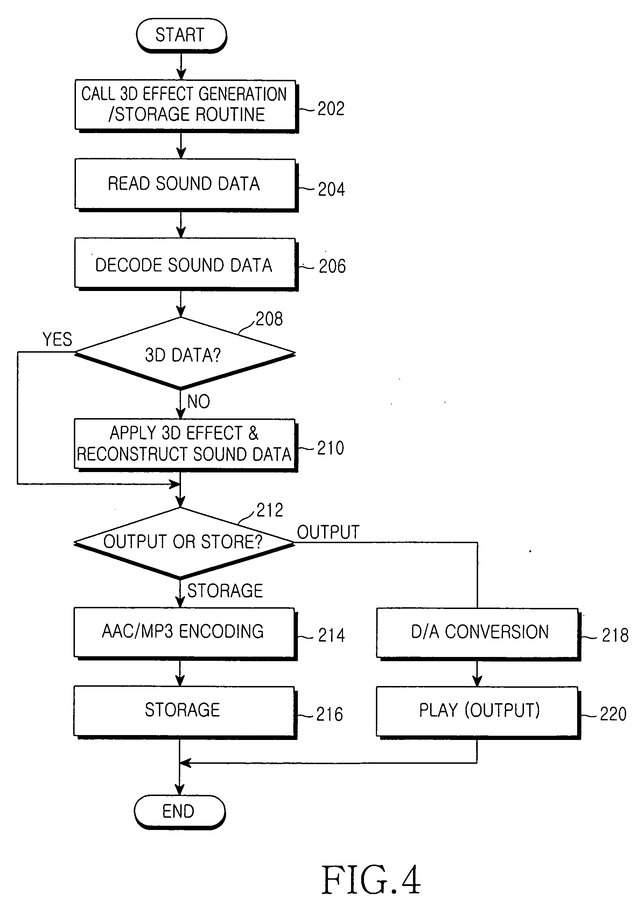

FIG. 4 is a flowchart illustrating a sound storage and playback procedure in a mobile communication terminal according to an embodiment of the present invention. In this embodiment, a procedure of generating and outputting and storing sound data having the three-dimensional stereo sound effect according to the user's choice will now be described.

When the user presses a function key or controls a menu to call a three-dimensional effect generation and storage routine in step 202, sound data to be applied to the three-dimensional stereo sound effect is read from the memory unit 62 in step 204. The read sound data is in MP3 or AAC format, the sound data is decoded by a relevant decoder 42 or 44 of the decoding unit 38 in step 206.

In step 208, the controller 30 determines whether or not the read sound data is three-dimensional sound data having the three-dimensional stereo sound effect. As a result, if the read sound data is three-dimensional sound data, the controller 30 proceeds to step 212, but if not, the controller 30 proceeds to step 210. In step 210, the sound data is applied with the three-dimensional stereo sound effect by the three-dimensional sound generation unit 52, thereby being reconstructed to three-dimensional sound data.

In step 212, the controller 30 determines whether the decoded or reconstructed three-dimensional sound data must be stored or played (output). When the user selects a storage mode, the encoding unit 54 encodes the three-dimensional sound data by a compression scheme, such as by the MP3 or AAC scheme, requested by the user using a relevant encoder 58 or 60 in step 214. In step 216, the encoded MP3 or AAC sound data is stored in the memory unit 62.

When the user selects a playback mode, the stereo digital-to-analog converter 48 converts the three-dimensional sound data into an analog signal in step 218. While in step 220, the analog signal is output through the speaker 50 including at least two speaker devices.

Now, the effects obtained according to the embodiments the present invention described in detail above will be briefly described.

According to embodiments of the present invention, it is possible to apply non-three-dimensional sound data with the three-dimensional stereo sound effect according to the user's selection. In addition, not only three-dimensional stereo sound data processed offline is played but also the non-three-dimensional sound data applied with the three-dimensional stereo sound effect can be played while the quality of an original sound is maintained at a satisfactory quality level, by reconstructing the sound data in the AAC or MP3 format. Consequently, it is possible to obtain an excellent three-dimensional stereo sound effect and an excellent performance of the sound data.

In addition, since the AAC format or the MP3 format is used, the amount of sound data is reduced by half, the capacity and the manufacturing cost for a data storing memory can be significantly reduced while an excellent perceptual quality of sound is ensured without any distortion. Also, since a period of time required to download sound data is also reduced by half, a user's download fee can decrease.

While the present invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. An apparatus for supporting three-dimensional stereo sound in a mobile communication terminal, the apparatus comprising:
a memory for storing non-three-dimensional sound data;
a three-dimensional sound generation unit for reading the sound data from the memory when an incoming call is generated or when playback is requested by a user, and for reconstructing the read sound data to have a three-dimensional stereo sound effect; and
a sound output unit for outputting the reconstructed sound data in a type of audible sound.

2. The apparatus as claimed in claim 1, further comprising a decoding unit for decoding the sound data read from the memory by a Motion Picture Experts Group-1 Audio layer 3 (MP3) decoding scheme or a MPEG-2 Advanced Audio Coding (AAC) decoding scheme and for transmitting the decoded sound data to the three-dimensional sound generation unit, when the sound data is in an MP3 format or an AAC format.

3. The apparatus as claimed in claim 1, further comprising an encoding unit for encoding the reconstructed sound data without distortion of the three-dimensional stereo sound effect, and transmitting the encoded sound data to the memory.

4. The apparatus as claimed in claim 3, wherein the encoding unit converts the reconstructed three-dimensional sound data into MP3 format or AAC format.

5. The apparatus as claimed in claim 1, wherein the sound output unit is a speaker, which comprises at least two speaker devices so that three-dimensional sound can be played.

6. The apparatus as claimed in claim 1, wherein the sound data is prestored in the memory by a manufacturer, or is download to the memory from a provider server or a user's personal computer through a wireless or wired interface.

7. A method for playing and storing sound data having a three-dimensional stereo sound effect in a communication terminal, the method comprising the steps of:
acquiring non-three-dimensional sound data;
reconstructing the acquired sound data to three-dimensional sound data having the three-dimensional stereo sound effect; and
outputting the reconstructed sound data in a type of audible sound.

8. The method as claimed in claim 7, further comprising a step of decoding sound data read from a memory by an MPEG-1 layer 3 (MP3) decoding scheme or an MPEG-2 Advanced Audio Coding (AAC) decoding scheme before reconstructing the read sound data, when the read sound data is in an MP3 or AAC format.

9. The method as claimed in claim 7, further comprising a step of encoding the reconstructed sound data without distortion of the three-dimensional stereo sound effect in order to store the reconstructed sound data in the memory.

10. The method as claimed in claim 9, wherein, in the step of encoding, the reconstructed three-dimensional sound data is converted to an MP3 or AAC format.

11. The method as claimed in claim 7, wherein, in the step of outputting, the three-dimensional sound data is output using at least two speaker devices so that three-dimensional sound can be played.

12. The method as claimed in claim 7, wherein the non-three-dimensional sound data is prestored in the memory by a manufacturer, or is download to the memory remotely from a provider server or directly from a user's personal computer.
